# EUROPEAN PATENT APPLICATION

(11) **EP 4 645 078 A1**
(43) Date of publication of application: **05.11.2025**
(21) Application number: 24221828.7
(22) Date of filing: 19.12.2024
(51) Int. Cl.: G06F 9/455

(54) **EXECUTING AN AUTOMATION SYSTEM WITH A CONTAINER ENGINE**

(30) Priority: 29.04.2024 US 202418648982
(71) Applicant: Red Hat, Inc., Raleigh, NC 27601 (US)
(72) Inventor: CHIBON, Pierre-Yves, Raleigh, 27601 (US); MILLER, Adam, Raleigh, 27601 (US)
(74) Representative: Murgitroyd & Company

(57) **Abstract**

Embodiments of the present disclosure relate to executing an automation system with a container engine. More specifically, a processing device obtains a domain-specific automation file comprising an indication of a set of tasks for automating a process. The processing device provides, via a host OS of a device, the domain-specific automation file to a container instance managed by a container engine. The processing device generates, via an automation system, a payload within the container instance based on the domain-specific automation file. The processing device outputs the payload to cause the set of tasks to be performed.

## Description

### TECHNICAL FIELD

Aspects of the present disclosure relate to containers, and more particularly, to executing an automation system with a container engine.

### BACKGROUND

Containers are active components executing on an operating system that provide an environment for applications to run, while being isolated from other components of a host machine, network, data center, etc. Multiple containers may execute on a single operating system (OS) kernel and share resources of hardware on which the operating system runs. Files, libraries, and dependencies for running an application in a container may be provided by image file(s). An image file may include a set of base layers that define a runtime environment, as well as packages and utilities used for a containerized application to run. A container may include the base layers from an image file as well as an in-memory layer in which the containerized application may write/modify data.

### SUMMARY

In a first aspect of the present disclosure there is provided a method, the method comprising obtaining a domain-specific automation file comprising an indication of a set of tasks for automating a process, providing, via a host operating system (OS) of a device, the domain-specific automation file to a container instance managed by a container engine, generating, by a processing device and via an automation system, a payload within the container instance based on the domain-specific automation file, and outputting the payload to cause the set of tasks to be performed.

The container instance may comprise a build phase of the container instance or a run phase of the container instance.

Generating the payload based on the domain-specific automation file may comprise generating an executable, and wherein outputting the payload may comprise outputting the executable.

Generating the payload based on the domain-specific automation file may comprise generating a script that is to be executed by an executable, and wherein outputting the payload may comprise outputting the script.

Outputting the payload may comprise outputting the payload to the host OS, and wherein the host OS may perform the set of tasks based on the payload.

Outputting the payload may comprise outputting the payload to a second container instance, and wherein the second container instance may perform the set of tasks based on the payload.

The container instance may be associated with a first context and the host OS may be associated with a second context that is different from the first context, and wherein generating the payload based on the domain-specific automation file may comprise translating the second context to the first context within the container instance.

The method may further comprise, responsive to outputting the payload, purging resources associated with the container instance.

The container engine may include a set of software dependencies for implementing the automation system, and wherein generating the payload may further be based on the set of software dependencies.

The container engine may invoke the automation system during a build phase or a run phase associated with the container instance, and wherein generating the payload may be further based on invoking the automation system during the build phase or the run phase.

The method may further comprise instantiating, via the container engine, the container instance based on a container image.

Outputting the payload may comprise transmitting the payload to a set of computing devices, and wherein each of the set of computing devices may perform the set of tasks based on the payload.

The process may comprise installing an application.

In a second aspect of the present disclosure there is provided a system, the system comprising a memory and a processing device, wherein the processor is configured to carry out the method of the first aspect. The processor is configured to obtain a domain-specific automation file comprising an indication of a set of tasks for automating a process, provide, via a host operating system (OS) of a device, the domain-specific automation file to a container instance managed by a container engine, generate, within the container instance and via an automation system, a payload based on the domain-specific automation file, and output the payload to cause the set of tasks to be performed.

The container instance may comprise a build phase of the container instance or a run phase of the container instance.

To generate the payload based on the domain-specific automation file, the processing device may be configured to generate an executable, and to output the payload, the processing device may be configured to output the executable.

To generate the payload based on the domain-specific automation file, the processing device may be configured to generate a script that is to be executed by an executable, and to output the payload, the processing device may be configured to output the script.

To output the payload, the processing device may be configured to output the payload to the host OS, and the host OS may perform the set of tasks based on the payload.

To output the payload, the processing device may be configured to output the payload to a second container instance, and the second container instance may perform the set of tasks based on the payload.

The container instance may be associated with a first context and the host OS may be associated with a second context that is different from the first context, and to generate the payload based on the domain-specific automation file, the processing device may be configured to translate the second context to the first context within the container instance.

The processor device may be further configured to, responsive to outputting the payload, purge resources associated with the container instance.

The container engine may include a set of software dependencies for implementing the automation system, and the processing device may be configured to generate the payload further based on the set of software dependencies.

The container engine may invoke the automation system during a build phase or a run phase associated with the container instance, and the processing device may be configured to generate the payload further based on invoking the automation system during the build phase or the run phase.

The processing device may be further configured to instantiate, via the container engine, the container instance based on a container image.

To output the payload, the processing device may be configured to transmit the payload to a set of computing devices, and each of the set of computing devices may perform the set of tasks based on the payload.

The processing device may be further configured to install an application.

In a third aspect of the present disclosure there is provided a non-transitory computer-readable medium which, when executed by a processing device, causes the processing device to carry out the method of the first aspect. The processing device is caused to obtain a domain-specific automation file comprising an indication of a set of tasks for automating a process, provide, via a host operating system (OS) of a device, the domain-specific automation file to a container instance managed by a container engine, generate, by the processing device and via an automation system, a payload within the container instance based on the domain-specific automation file, and output the payload to cause the set of tasks to be performed.

The container instance may comprise a build phase of the container instance or a run phase of the container instance.

To generate the payload based on the domain-specific automation file, the processing device may be caused to generate an executable, and to output the payload, the processing device may be caused to output the executable.

To generate the payload based on the domain-specific automation file, the processing device may be caused to generate a script that is to be executed by an executable, and to output the payload, the processing device may be caused to output the scriptt.

To output the payload, the processing device may be caused to output the payload to the host OS, and the host OS may perform the set of tasks based on the payload.

To output the payload, the processing device may be caused to output the payload to a second container instance, and the second container instance may perform the set of tasks based on the payload.

The container instance may be associated with a first context and the host OS may be associated with a second context that is different from the first context, and to generate the payload based on the domain-specific automation file, the processing device may be caused to translate the second context to the first context within the container instance.

The processor device may be further caused to, responsive to outputting the payload, purge resources associated with the container instance.

The container engine may include a set of software dependencies for implementing the automation system, and the processing device may be caused to generate the payload further based on the set of software dependencies.

The container engine may invoke the automation system during a build phase or a run phase associated with the container instance, and the processing device may be configured to generate the payload further based on invoking the automation system during the build phase or the run phase.

The processing device may be further caused to instantiate, via the container engine, the container instance based on a container image.

To output the payload, the processing device may be caused to transmit the payload to a set of computing devices, and each of the set of computing devices may perform the set of tasks based on the payload.

The processing device may be further caused to install an application.

Individuals will appreciate the scope of the disclosure and realize additional aspects thereof after reading the following detailed description of the examples in association with the accompanying drawing figures.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system in accordance with some aspects of the present disclosure.
FIG. 2A is a block diagram that illustrates an example container executing within a computing device in accordance with some aspects of the present disclosure.
FIG. 2B is a block diagram that illustrates an example of an image file and an in-memory layer of a container in accordance with some aspects of the present disclosure.
FIG. 3 is a block diagram that illustrates an example system in accordance with some aspects of the present disclosure.
FIG. 4 is a block diagram that illustrates an example of executing an automation system within a container engine in accordance with some aspects of the present disclosure.
FIG. 5 is a flow diagram of a method of executing an automation system with a container engine in accordance with some aspects of the present disclosure.
FIG. 6 is a block diagram of an example computing system that may perform one or more of the operations described herein in accordance with some aspects of the present disclosure.

### DETAILED DESCRIPTION

An automation system refers to software that automates provisioning, configuration, management, application deployment, orchestration, and other processes. For instance, an automation system may eliminate and/or simplify workflows, manage and maintain system configurations, continuously deploy complex software applications, and/or perform zero-downtime rolling software updates. In an example, an automation system may be provided with a domain-specific automation file that specifies tasks to be performed to automate a process. The automation system may convert the domain-specific automation file into a payload (e.g., an executable or a script). The automation system may then perform the tasks to automate the process based on the payload. One example of an automation system is Redhat^{™} Ansible^{™}.

Containers enable processes to be run in an isolated environment. A container engine manages containers. With more particularity, a container engine may receive user input, provide the user input to an application program interface (API), retrieve container images from a container image repository (e.g., a server), prepare a container mount point (e.g., a copy-on-write storage), prepare metadata used to start the container, and call a container runtime that runs the container. Some container engines may run the container. In an example, an application may utilize a first version of a programming language (e.g., Python^{®} 3); however, a host OS of a computing device may have a second version of the programming language (e.g., Python^{®} 2) installed therein. The computing device may be provided with a container that includes the application and the first version of the programing language. The computing device may then execute the container to execute the application.

Automation systems and containers may be configured to interface with one another; however, such configurations are associated with high computational overhead, high storage overhead, and/or high network resource usage overhead. For instance, one approach for interfacing an automation system with a container includes establishing a connection plugin between the automation system and a container. The automation system creates a payload for a task, establishes a connection with the container, and copies the payload into instance storage of a runtime of the container (i.e., "a container runtime"). The container runtime runs the payload and sends results of the payload back to the automation system, whereupon the automation system tears down the connection. The automation system and the container repeat this process for each task that is to be performed. As an automated process may include many tasks, repeating the aforementioned process may be computationally burdensome due to continually establishing and tearing down connections for each task. Another approach for interfacing an automation system with a container includes establishing a first instance of an automation system outside of the container (e.g., in a host OS) and establishing a second instance of the automation system with a base image of a container. The first instance and the second instance then communicate to exchange payloads. However, establishing and maintaining the first instance and the second instance may be computationally burdensome.

The present disclosure addresses the above-noted and other deficiencies by using a processing device to execute an automation system with a container engine. In an example, a processing device obtains a domain-specific automation file comprising an indication of a set of tasks for automating a process. The processing device provides, via a host operating system (OS) of a device, the domain-specific automation file to a container instance managed by a container engine. The processing device generates, via an automation system, a payload within the container instance based on the domain-specific automation file. The processing device outputs the payload to cause the set of tasks to be performed.

The technologies described herein may be associated with various advantages. For instance, vis-a-vis generating, via an automation system, a payload within the container instance based on the domain-specific automation file, a computing device may be able to conserve storage space and processing resources associated with maintaining a layered image. With more particularity, in comparison to other techniques for interfacing an automation system with a container, the technologies described herein do not utilize a connection plugin or separate instances of an automation system executing inside and outside of a container. As such, the technologies described herein may avoid establishing and tearing down connections for each task that is to be performed and the technologies described herein may avoid creating a first instance of an automation system outside of the container instance and a second instance of the automation system within the container instance. Furthermore, the technologies described herein may avoid having to maintain a layered image that includes the automation system itself; instead, the technologies described herein utilize the automation system as part of a container engine. Thus, the technologies described herein avoid computational overhead and/or storage overhead associated with a connection plugin and separate instances of an automation system by generating, via an automation system, a payload within the container instance based on the domain-specific automation file. The payload may be output to different destinations (e.g., another container instance, the OS, different computing devices, etc.) in order to automate the process in different contexts.

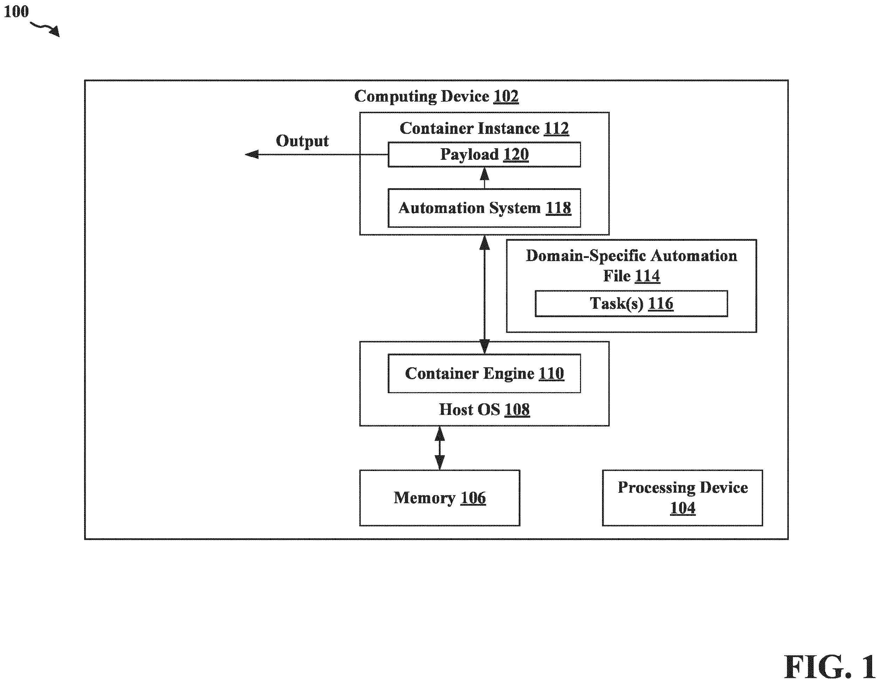

FIG. 1 is a block diagram 100 that illustrates an example system. As illustrated in FIG. 1, the system includes a computing device 102. The computing device 102 may include hardware such as a processing device 104 (e.g., processors, central processing units (CPUs)), memory 106 (e.g., random access memory (RAM), storage devices (e.g., a hard-disk drive (HDD)), and solid-state drives (SSD), etc.), and other hardware devices (e.g., a sound card, video card, etc.). A storage device may include a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices.

The computing device 102 may be or include any suitable type of computing device or machine that has a programmable processor including, for example, server computers, desktop computers, laptop computers, tablet computers, smartphones, set-top boxes, etc. In some examples, the computing device 102 may comprise a single machine or may include multiple interconnected machines (e.g., multiple servers configured in a cluster). The computing device 102 may execute or include an operating system (OS), such as a host OS 108. The host OS 108 may refer to the primary OS of the computing device 102 that interfaces directly with hardware (e.g., the processing device 104, the memory 106, etc.) of the computing device 102. For instance, the host OS 108 executes directly on the hardware of the computing device 102. The host OS of the computing device 102 may manage the execution of other components (e.g., software, applications, etc.) and/or may manage access to the hardware (e.g., processors, memory, storage devices, etc.) of the computing device 102.

As illustrated in FIG. 1, the computing device 102 may execute a container engine 110 that executes on top of the host OS 108. The computing device 102 may also execute a container instance 112. For instance, the container engine 110 may instantiate and execute the container instance 112 based on a container image (described in greater detail below). With more particularity, the container engine 110 may take a container image and convert the container image into a running instance (i.e., a container instance) of the container image. Instantiating the container instance 112 may include assigning/allocating resources to the container instance 112. Instantiating the container instance 112 may also include retrieving a container image from a container image repository (e.g., a server), preparing a container mount point (e.g., a copy-on-write storage), preparing metadata used to start the container, and calling a container runtime that runs the container instance 112. The container instance 112 may be a build phase of a container instance or a run phase of a container instance. A build phase of a container may refer to a phase in which actions are performed to build the container. A run phase of a container may refer to a phase in which actions are performed as the container runs. The container engine 110 may allow for different containers (including the container instance 112) to share elements (e.g., an OS kernel, packages, binaries, libraries, source files, etc.) of the host OS 108. For example, the container engine 110 may multiplex the packages of the host OS 108 between multiple containers. The container engine 110 may also facilitate interactions between the container instance 112 and the resources of the computing device 102. For example, the container engine 110 may manage requests from the container instance 112 to access a memory (e.g., a RAM) of the computing device 102. In another example, the container engine 110 may manage requests from the container instance 112 to access certain packages of the host OS 108. The container engine 110 may also create, remove, and/or manage containers. In one aspect, the container engine 110 may be a component of the host OS 108 (e.g., Red Hat^{™} Enterprise Linux). In another embodiment, the container engine 110 may run on top of the host OS 108, or the container engine 110 may run directly on host hardware without the use of the host OS 108. In other aspects, the container engine 110 may be a component of a network virtualization platform (not shown), such as the RedHat^{™} OpenStack^{™} platform, that runs on the host OS 108. The container engine 110 may include software or logic to build a container using a container image such as a docker file. The container instance 112 may be isolated, that is, the container instance 112 may not be connected to other devices or components of the computing device 102. Although FIG. 1 illustrates only a (single) computing device 102 for ease of illustration and description, the computing device 102 may be just one deployment among many within an overarching cloud or on-premises infrastructure that the system represents.

The computing device 102 may obtain a domain-specific automation file 114. For instance, the computing device 102 may receive the domain-specific automation file 114 over a network connection or the computing device 102 may receive the domain-specific automation file 114 via manual input from a user. The domain-specific automation file 114 may be stored in computer-readable storage (e.g., the memory 106, a data store, etc.). The domain-specific automation file 114 includes indications of task(s) 116 that are to be performed to automate a process. In an example, the process may be installing an application on one or more computers, and the task(s) 116 may include instructions for installing the application. In one aspect, the task(s) 116 are an ordered sequence of tasks that are executed sequentially. In an example, the domain-specific automation file 114 may be a yet another markup language (YAML) file. In an example, the domain-specific automation file 114 may be a Red Hat^{™} Ansible^{™} playbook.

The computing device 102 may include an automation system 118. In an example, the automation system 118 may be Red Hat^{™} Ansible^{™}. The automation system 118 may automate provisioning, configuration, management, application deployment, orchestration, and other processes. For instance, an automation system may eliminate and/or simplify workflows, manage and maintain system configurations, continuously deploy complex software applications, and/or perform zero-downtime rolling software updates. The automation system 118 may be implemented in the container instance 112. For instance, the automation system 118 may be implemented within a runtime of the container instance 112 (i.e., a container runtime). The container runtime may confirm to a specification promulgated by the Open Container Initiative (OCI). A container runtime may refer to a software packages that includes instructions for leveraging specific features on a supported OS in order to create a space to run a specified container image. In some aspects, the automation system 118 may be implemented within the container engine 110.

The host OS 108 may provide the domain-specific automation file 114 to the container instance 112 that is managed by the container engine 110. The automation system 118 generates, within the container instance 112, a payload 120 based on the domain-specific automation file 114. For instance, the automation system 118 may translate the domain-specific automation file 114 to the payload 120 based on rules of the automation system 118. In one aspect, a container image file associated with a container (corresponding to the container instance 112) may include a reserved word that enables the automation system 118 to generate the payload 120 within the container instance. In one aspect, the automation system 118 may generate the payload 120 based on a parameter of a command received through a command line. In one aspect, the container engine 110 includes a set of software dependencies for implementing the automation system 118. The container engine 110 generates the payload 120 based on the set of software dependencies. In another aspect, the container engine 110 invokes the automation system 118 during a build phase or a run phase of the container instance 112. The container engine 110 generates the payload 120 based on invoking the automation system 118 during the build phase or the run phase. In a specific example, providing the domain-specific automation file 114 to the container instance 112 and generating the payload 120 may be performed through the following command: "podman run ansible=playbook/foo.yaml." In one aspect, providing the domain-specific automation file 114 to the container instance 112 and generating the payload 120 may be performed via a "libcontainer" package of the container engine 110.

In one aspect, the payload 120 may be an executable file (e.g., a ".exe" file) that, when executed by a device (e.g., the computing device 102), causes the device to perform the task(s) 116 to automate the process. In another aspect, the payload 120 may be a script (e.g., a bash script) that, when executed/interpreted by a device (e.g., the computing device 102), causes the device to perform the task(s) 116 to automate the process. The container instance 112 may output the payload 120 to a destination (described in greater detail below). For instance, the container instance 112 may output an executable or the container instance 112 may output a script. Responsive to outputting the payload 120, the container engine 110 may automatically unassign/deallocate the resources previously assigned/allocated to the container instance 112

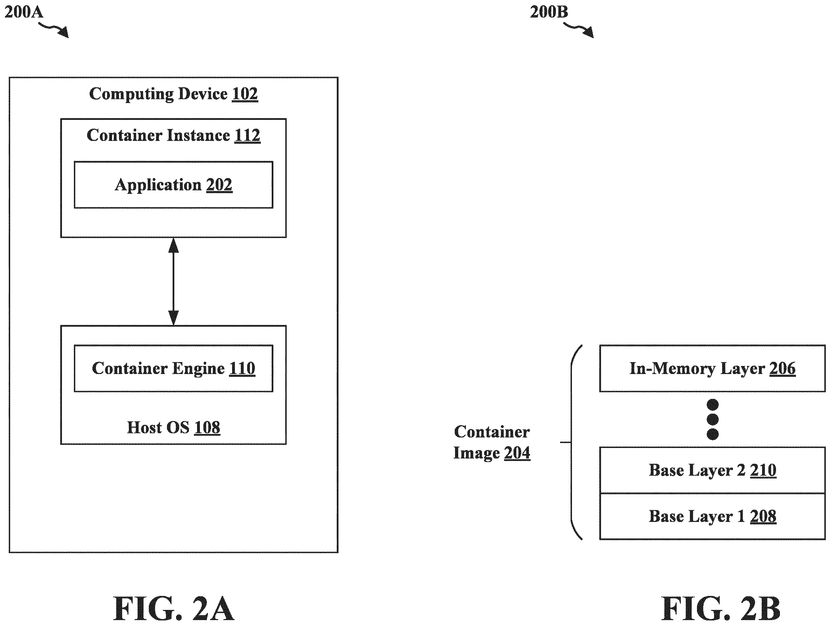

FIG. 2A is a block diagram 200A that illustrates an example container executing within the computing device 102 in accordance with some aspects of the present disclosure. As described above, the container instance 112 may be an isolated set of resources allocated to executing an application, software, and/or process independent from other applications, software, and/or processes. The host OS 108 may use namespaces to isolate the resources of the containers from each other. In another embodiment, the container instance 112 may be a virtualized object similar to a virtual machine. However, the container instance 112 may not implement a separate guest OS. The container instance 112 may share the OS kernel and packages (e.g., libraries, binary files, and source files) of the host OS 108 with other containers (not shown) that are executing on the computing device 102. Although FIG. 2A illustrates a (single) container instance 112, the computing device 102 may include multiple containers in other embodiments. Each container may have one or more respective file systems, memories, devices, network ports, etc., for accessing the physical resources of the computing device 102 (e.g., the processing device 104 and the memory 106, shown in FIG. 1).

As illustrated in FIG. 2A, an application 202 may execute within the container instance 112. For example, the application 202 may execute within a runtime environment (i.e., a container runtime, not shown in the figures) of the container instance 112. In one aspect, the application 202 may be associated with the tasks(s) 116. Both the container instance 112 and the application 202 may be created by the host OS 108 (e.g., via the container engine 110). The host OS 108, via the computing device 102, may provide administrators and users with the capability to configure and deploy a variety of applications and/or network functions within containers.

The container engine 110 may provide an image-based deployment module for creating containers and may store one or more image files (referred to herein as "container images") for creating container instances. In some embodiments, the container images may be stored in a registry server (e.g., after being generated by a developer or vendor). Each container image may include a series of layers, which may be combined into a single image as discussed in further detail herein.

The container engine 110 may include a storage driver (not shown), such as OverlayFS, to manage the contents of a container including a read only (e.g., a base layer) and a writable (e.g., in-memory) layer of the container. The storage driver may be a type of union file system which allows a developer to overlay one layer on top of another. Changes (e.g., data to be written) may be recorded in the upper-most layer (e.g., the in-memory layer), while the lower layer(s) (e.g., base images) remain unmodified. In this way, multiple containers may share an image file that includes base layers that are read-only.

FIG. 2B is a block diagram 200B that illustrates an example of a container image 204 and an in-memory layer 206 of a container in accordance with some aspects of the present disclosure. The container image 204 may be stored by the container engine 110 illustrated in FIG. 2A or a registry server. In some embodiments, as illustrated in FIG. 2B, the container image 204 may include a first base layer 208 and a second base layer 210. Although not depicted in FIG. 2B, the container image 204 may include any number of base layers (e.g., one base layer, five base layers, ten base layers, etc.). The container image 204 may be shared by multiple containers. When the container engine 110 creates a new container, it may add a new writable (e.g., in-memory) layer on top of the underlying base layers (e.g., the first base layer 208 and the second base layer 210). This new writable layer is illustrated as the in-memory layer 206 in FIG. 2B. When the container is deleted, the in-memory layer 206 is also deleted. However, the underlying container image 204 remains unchanged. Base layers (e.g., the first base layer 208 and the second base layer 210) may define the runtime environment as well as the packages and utilities necessary for a containerized application to run. In the example of FIG. 2B, the first base layer 208 may include the host OS 108 (including, for example, the OS kernel as well as the packages of the host OS 108 including any associated libraries, binaries, and/or source files, etc.) on which the application 202 may run. The second base layer 210 may include the application 202 itself, including any packages and utilities necessary for the application 202 to run. Thus, the first base layer 208 and the second base layer 210 may each include static snapshots of a configuration of the container image 204 and may be read-only layers that are not modified. Any changes (e.g., data to be written by the application 202) may be implemented in subsequent (upper) layers, such as the in-memory layer 206. Changes made in the in-memory layer 206 may be saved by creating a new layered image.

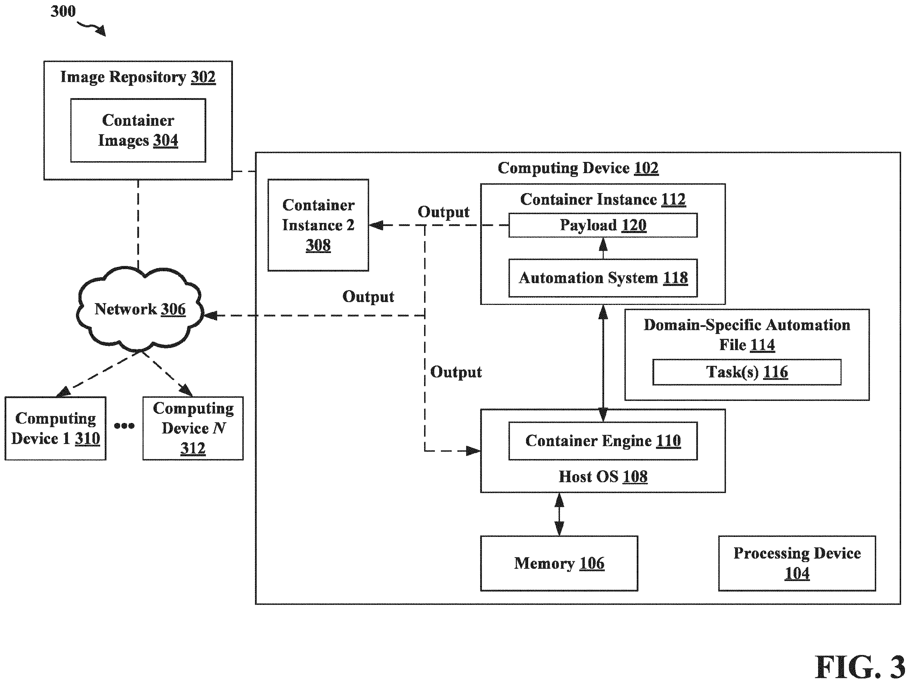

FIG. 3 is a block diagram 300 that illustrates an example system in accordance with some aspects of the present disclosure. The system may include the computing device 102, the processing device 104, the memory 106, the host OS 108, the container engine 110, the container instance 112, the domain-specific automation file 114, the automation system 118, and/or the payload 120.

The system may also include an image repository 302. The image repository 302 may store container images 304 (e.g., the container image 204). In one aspect, the image repository 302 may be a server (e.g., a registry server) that coupled (e.g., operatively coupled, communicatively coupled, etc.) to the computing device 102 by way of a network 306. The network 306 may be a public network (e.g., the internet), a private network (e.g., a local area network (LAN) or wide area network (WAN)), or a combination thereof. In one aspect, the network 306 may include a wired or a wireless infrastructure, which may be provided by one or more wireless communications systems, such as a WiFi^{™} hotspot connected with the network 306 and/or a wireless carrier system that can be implemented using various data processing equipment, communication towers (e.g., cell towers), etc. The network 306 may carry communications (e.g., data, message, packets, frames, etc.) between the computing device 102 and the image repository 302. In another aspect, the image repository 302 may be local storage of the computing device 102.

As noted above, the container instance 112 may output the payload 120 to a destination. In one aspect, the destination may be a second container instance 308 on the computing device 102 that is managed by the container engine 110. For instance, the container instance 112 may output the payload 120 (e.g., an executable or a script) to the second container instance 308, whereupon the second container instance 308 may execute the payload 120. Executing the payload 120 causes the second container instance 308 to perform the task(s) 116 to automate the process.

In another aspect, the destination may be the host OS 108. For instance, the container instance 112 may output the payload 120 (e.g., an executable or a script) to the host OS 108, whereupon the host OS 108 may execute the payload 120. Executing the payload 120 causes the host OS 108 to perform the task(s) 116 to automate the process.

In a further aspect, the destination may be a first computing device 310 and/or an Nth computing device 312, where N is a positive integer greater than one. The first computing device 310 and the Nth computing device 312 may be collectively referred to as "a set of computing devices 310-312." The set of computing devices 310-312 may be coupled (e.g., operatively coupled, communicatively coupled, etc.) to the computing device 102 by way of the network 306. The container instance 112 may output (i.e., transmit) the payload 120 (e.g., an executable or a script) to one or more of the set of computing devices 310-312. One or more of the set of computing devices 310-312 may execute (e.g., in a container instance or in a host OS) the payload 120. Executing the payload 120 causes the one or more of the set of computing devices 310-312 to perform the task(s) 116 to automate the process.

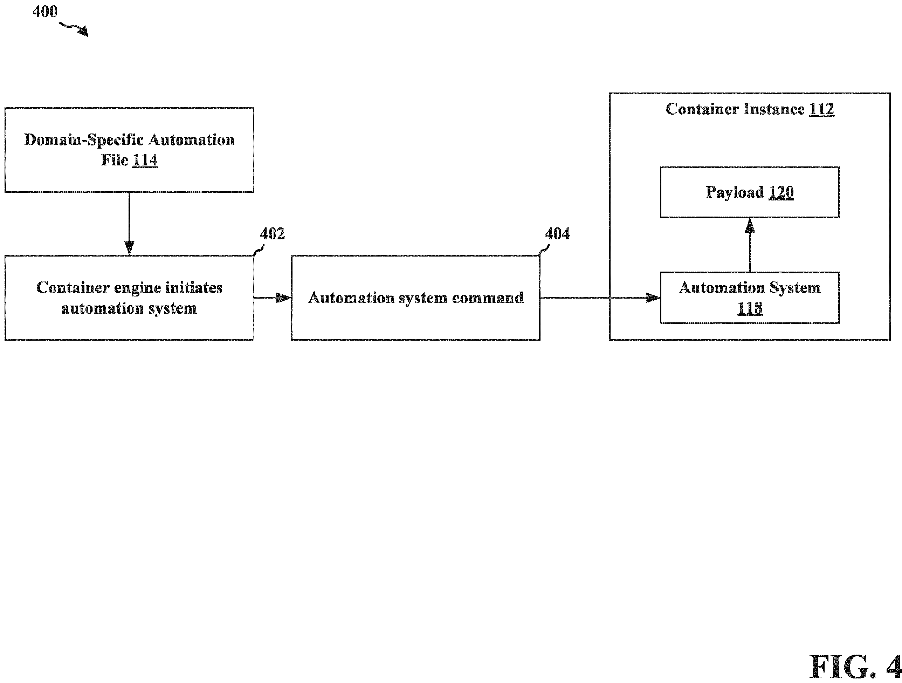

FIG. 4 is a block diagram 400 that illustrates an example of executing an automation system within a container engine in accordance with some aspects of the present disclosure. At 402, a container engine (e.g., the container engine 110) may initiate the automation system 118. At 404, an automation system comment may be executed which causes the domain-specific automation file 114 to be provided to the container instance 112. The automation system 118 generates the payload 120 in the container instance 112 based on the domain-specific automation file 114.

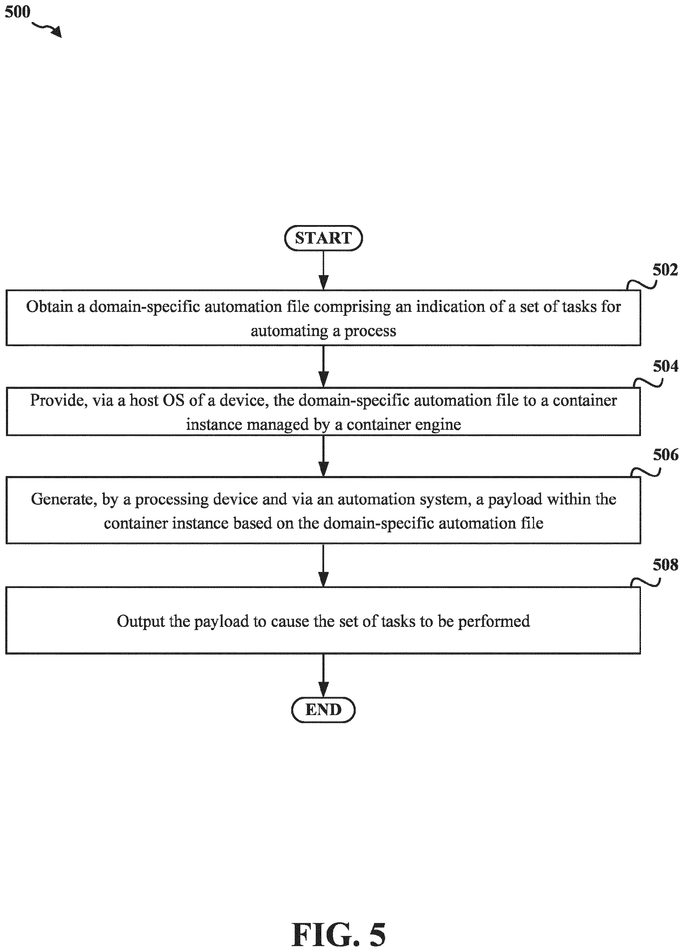

FIG. 5 is a flow diagram 500 of a method of executing an automation system with a container engine in accordance with some aspects of the present disclosure. The method may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method may be performed by a computing device (e.g., computing device 102 illustrated in FIG. 1, FIG. 2A, FIG. 3, and/or FIG. 6).

At block 502, the computing device obtains a domain-specific automation file comprising an indication of a set of tasks for automating a process. In an example, the computing device may be or include the computing device 102, the domain-specific automation file may be or include the domain-specific automation file 114, and the tasks may be or include the task(s) 116. In an example, the computing device may obtain the domain-specific automation file via a network or via manual input received from a user. In an example, the set of tasks, when executed, automates an installation of an application. In an example, the domain-specific automation file is a markup language file, such as a YAML file.

At block 504, the computing device provides, via a host OS of a device, the domain-specific automation file to a container instance managed by a container engine. In an example, the host OS may be or include the host OS 108, the container instance may be or include the container instance 112, and the container engine may be or include the container engine 110. In an example, the container instance is a build phase of the container instance or a run phase of the container instance.

At block 506, the computing device generates, by a processing device and via an automation system, a payload within the container instance based on the domain-specific automation file. In an example, the payload may be or include the payload 120. In one example, the payload is an executable (i.e., an executable file). In another example, the payload is a script (i.e., a script file) that is executed by an executable. In one aspect, the container instance is associated with a first context (e.g., a first runtime) and the host OS is associated with a second context (e.g., a second runtime) that is different from the first context, and generating the payload includes translating the second context to the first context (e.g., via a set of rules). In one aspect, the container engine includes a set of software dependencies (e.g., libraries, binaries, etc.) for implementing the automation system, and the computing device generates the payload based on the domain-specific automation file and the set of software dependencies. In another aspect, the container engine invokes the automation system during a build phase or a run phase associated with the container instance, and the computing device generates the payload based on the invocation.

At block 508, the computing device outputs the payload to cause the set of tasks to be performed. In one example, the payload is output to a second container instance that is different from the container instance, and the second container instance performs the set of tasks to automate the process based on the payload. In an example, the second container instance may be or include the second container instance 308. In another example, the payload is output to the host OS (e.g., the host OS 108), and the host OS instance performs the set of tasks to automate the process based on the payload. In a further example, the payload is output to a set of computing devices, and each of the set of computing devices performs the set of tasks based on the payload. In an example, the set of computing devices may be or include the first computing device 310 and the Nth computing device 312.

In one aspect, the computing device instantiates, via the container engine, the container instance based on a container image. In an example, the container image may be or include the container image 204. Instantiating the container instance may include allocating resources for the container instance. After the computing device outputs the payload, the computing device may automatically purge (i.e., deallocate) the resources.

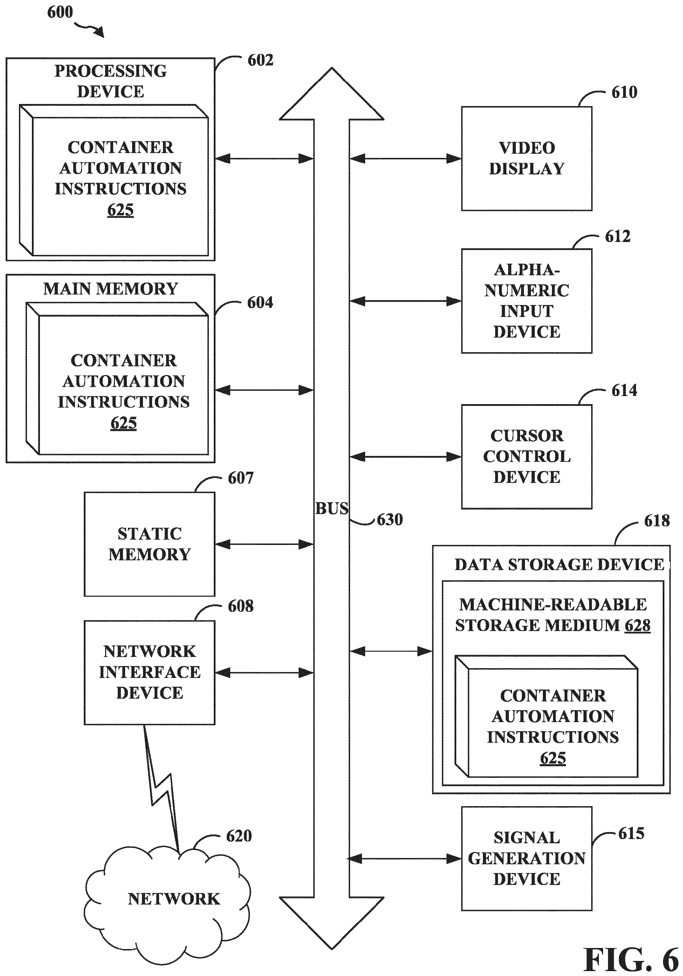

FIG. 6 illustrates a diagrammatic representation of a machine in the example form of a computing system 600 within which a set of instructions, for causing the machine to perform any one or more of the methodologies discussed herein for containerizing the packages of an operating system. More specifically, the machine may obtain a domain-specific automation file comprising an indication of a set of tasks for automating a process. The machine may provide, via a host OS of a device, the domain-specific automation file to a container instance managed by a container engine. The machine may generate, by a processing device and via an automation system, a payload within the container instance based on the domain-specific automation file. The machine may output the payload to cause the set of tasks to be performed.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computing system 600 may be representative of a server.

The computing system 600 includes a processing device 602, a main memory 604 (e.g., read-only memory (ROM), flash memory, dynamic random access memory (DRAM), a static memory 607 (e.g., flash memory, static random access memory (SRAM), etc.), and a data storage device 618, which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computing system 600 may further include a network interface device 608 which may communicate with a network 620. The computing system 600 also may include a video display 610 (e.g., a liquid crystal display (LCD) or a cathode ray tube (CRT)), an alpha-numeric input device 612 (e.g., a keyboard), a cursor control device 614 (e.g., a mouse), and a signal generation device 615 (e.g., a speaker). In one example, the video display 610, the alpha-numeric input device 612, and the cursor control device 614 may be combined into a single component or device (e.g., an LCD touch screen).

The processing device 602 represents one or more general-purpose processing devices such as a microprocessor, central processing unit, or the like. More particularly, the processing device 602 may be complex instruction set computing (CISC) microprocessor, reduced instruction set computer (RISC) microprocessor, very long instruction word (VLIW) microprocessor, or processor implementing other instruction sets, or processors implementing a combination of instruction sets. The processing device 602 may also be one or more special-purpose processing devices such as an application specific integrated circuit (ASIC), a field programmable gate array (FPGA), a digital signal processor (DSP), network processor, or the like. The processing device 602 is configured with container automation instructions 625, for performing the operations and steps discussed herein. The container automation instructions 625 may include instructions to obtain a domain-specific automation file comprising an indication of a set of tasks for automating a process. The container automation instructions 625 may include instructions to provide, via a host OS of a device, the domain-specific automation file to a container instance managed by a container engine. The container automation instructions 625 may include instructions to generate, by a processing device and via an automation system, a payload within the container instance based on the domain-specific automation file. The container automation instructions 625 may include instructions to output the payload to cause the set of tasks to be performed.

The data storage device 618 may include a machine-readable storage medium 628 storing the container automation instructions 625 (e.g., software) embodying any one or more of the methodologies of functions described herein. The container automation instructions 625 may also reside, completely or at least partially, within the main memory 604 or within the processing device 602 during execution thereof by the computing system 600; the main memory 604 and the processing device 602 also constituting machine-readable storage media. The container automation instructions 625 may further be transmitted or received over the network 620 via the network interface device 608.

The machine-readable storage medium 628 may also be used to store the container automation instructions 625 to perform a method for executing an automation system with a container instance, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

The preceding description sets forth numerous specific details such as examples of specific systems, components, methods, and so forth, in order to provide a good understanding of several embodiments of the present disclosure. It will be apparent to one skilled in the art, however, that at least some embodiments of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular embodiments may vary from these exemplary details and still be contemplated to be within the scope of the present disclosure.

Additionally, some embodiments may be practiced in distributed computing environments where the machine-readable medium is stored on and or executed by more than one computer system. In addition, the information transferred between computer systems may either be pulled or pushed across the communication medium connecting the computer systems.

Embodiments of the claimed subject matter include, but are not limited to, various operations described herein. These operations may be performed by hardware components, software, firmware, or a combination thereof.

Although the operations of the methods herein are shown and described in a particular order, the order of the operations of each method may be altered so that certain operations may be performed in an inverse order or so that certain operation may be performed, at least in part, concurrently with other operations. In another embodiment, instructions or sub-operations of distinct operations may be in an intermittent or alternating manner.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an embodiment" or "one embodiment" or "an implementation" or "one implementation" throughout is not intended to mean the same embodiment or implementation unless described as such. Furthermore, the terms "first," "second," "third," "fourth," etc. as used herein are meant as labels to distinguish among different elements and may not necessarily have an ordinal meaning according to their numerical designation.

It will be appreciated that variants of the above-disclosed and other features and functions, or alternatives thereof, may be combined into may other different systems or applications. Various presently unforeseen or unanticipated alternatives, modifications, variations, or improvements therein may be subsequently made by those skilled in the art which are also intended to be encompassed by the following claims. The claims may encompass embodiments in hardware, software, or a combination thereof.

## Claims

1. A method, comprising:
obtaining a domain-specific automation file comprising an indication of a set of tasks for automating a process;
providing, via a host operating system (OS) of a device, the domain-specific automation file to a container instance managed by a container engine;
generating, by a processing device and via an automation system, a payload within the container instance based on the domain-specific automation file; and
outputting the payload to cause the set of tasks to be performed.

2. The method of claim 1, wherein the container instance comprises a build phase of the container instance or a run phase of the container instance.

3. The method of claim 1, wherein generating the payload based on the domain-specific automation file comprises generating an executable, and wherein outputting the payload comprises outputting the executable.

4. The method of claim 1, wherein generating the payload based on the domain-specific automation file comprises generating a script that is to be executed by an executable, and wherein outputting the payload comprises outputting the script.

5. The method of claim 1, wherein outputting the payload comprises outputting the payload to the host OS, and wherein the host OS performs the set of tasks based on the payload.

6. The method of claim 1, wherein outputting the payload comprises outputting the payload to a second container instance, and wherein the second container instance performs the set of tasks based on the payload.

7. The method of claim 1, wherein the container instance is associated with a first context and the host OS is associated with a second context that is different from the first context, and wherein generating the payload based on the domain-specific automation file comprises translating the second context to the first context within the container instance.

8. The method of claim 1, further comprising:
responsive to outputting the payload, purging resources associated with the container instance.

9. The method of claim 1, wherein the container engine includes a set of software dependencies for implementing the automation system, and wherein generating the payload is further based on the set of software dependencies.

10. The method of claim 1, wherein the container engine invokes the automation system during a build phase or a run phase associated with the container instance, and wherein generating the payload is further based on invoking the automation system during the build phase or the run phase.

11. The method of claim 1, further comprising:
instantiating, via the container engine, the container instance based on a container image.

12. The method of claim 1, wherein outputting the payload comprises transmitting the payload to a set of computing devices, and wherein each of the set of computing devices performs the set of tasks based on the payload.

13. The method of claim 1, wherein the process comprises installing an application.

14. A system comprising:
a memory; and
a processing device operatively coupled to the memory, the processing device configured to perform the method of any of claims 1-13.

15. A non-transitory computer-readable medium having instructions stored thereon which, when executed by a processing device, cause the processing device to perform the method of any of claims 1-13.
